(19) Europäisches Patentamt
European Patent Office
Office européen des brevets

(11) **EP 3 574 035 B1**

(12) **EUROPEAN PATENT SPECIFICATION**

(45) Date of publication and mention
of the grant of the patent:
**03.03.2021 Bulletin 2021/09**

(51) Int Cl.:
***C08G 63/672*** (2006.01)    ***C08G 63/199*** (2006.01)

(21) Application number: **18702361.9**

(86) International application number:
**PCT/NL2018/050044**

(22) Date of filing: **22.01.2018**

(87) International publication number:
**WO 2018/139919 (02.08.2018 Gazette 2018/31)**

(54) **2, 5-FURANDICARBOXYLIC ACID-BASED POLYESTERS**

2,5-FURANDICARBONSÄUREBASIERTE POLYESTER

POLYESTERS À BASE D'ACIDE 2, 5-FURANDICARBOXYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 NL 2018236**

(43) Date of publication of application:
**04.12.2019 Bulletin 2019/49**

(73) Proprietors:
 • **Furanix Technologies B.V.**
  **1014 BV Amsterdam (NL)**
 • **Roquette Frères**
  **62136 Lestrem (FR)**

(72) Inventors:
 • **JACQUEL, Nicolas**
  **59130 Lambersart (FR)**
 • **DEGAND, Gabriel**
  **62120 Lambres (FR)**
 • **SAINT-LOUP, René**
  **59160 Lomme (FR)**
 • **DAM, Matheus Adrianus**
  **1014 BV Amsterdam (NL)**
 • **WANG, Bing**
  **1014 BV Amsterdam (NL)**

(74) Representative: **EP&C**
  **P.O. Box 3241**
  **2280 GE Rijswijk (NL)**

(56) References cited:
 **EP-A1- 2 857 433**    **WO-A1-2015/142181**
 **WO-A2-2014/100256**    **WO-A2-2014/100257**

## Description

### Field of the Invention

The invention is directed to new polyesters containing 2,5-furandicarboxylic acid moieties and at least one 1,4 : 3,6-dianhydrohexitol moiety. The invention also relates to a process of preparing these polyesters and their use for manufacturing different articles.

### Background of the Invention

As a result of their ability to be easily processed at high throughput and their versatility, polymer materials have become more and more important in industry over the years.

Certain thermoplastic aromatic polyesters may directly be processed due to their thermal properties. These polyesters contain aliphatic diol moieties and aromatic diacid moieties. One such polyester is polyethylene terephthalate (PET), a polyester comprising ethylene glycol moieties and terephthalate moieties, used in particular in the field of packaging.

Most polymer materials used today, including PET, are based on non-renewable carbon sources, especially mineral oil. As mineral oil is a limited resource, it is important to develop new alternative polymer materials which are at least partly based on monomers from renewable resources.

US 2013/0171397 A1 relates to 2,5-furandicarboxylic acid based polyesters prepared from biomass. One of the polyesters described therein is polyethylene isosorbide furandicarboxylate (PEIF) which is prepared from 2,5-furandicarboxylic acid, ethylene glycol and isosorbide. Also described is polyethylene furandicarboxylate (PEF), a polyester prepared from 2,5-furandicarboxylic acid and ethylene glycol. The glass transition temperature (Tg) of PEIF is relatively low with a maximum of 78 °C compared to 79 °C for PEF which indicates a low level of isosorbide in the polyester. Moreover, the reaction times are very long, especially for PEIF (31h).

WO 2015/142181 A1 describes polyesters comprising at least one furandicarboxylate unit, at least one saturated, linear or branched diol unit comprising 2 to 10 carbon atoms, and at least one bicyclic diol unit, said bicyclic diol unit being chosen from, isosorbide, isoidide, isomannide, 2,3:4,5-di-O-methylene-galactitol, and 2,3:4,5-di-O-methylene-D-mannitol. These polyesters are taught to have glass transition temperatures of greater than or equal to 90°C. The example section discloses several synthesis of poly(ethylene-co-isosorbide furanoate (polyethylene isosorbide furandicarboxylate (PEIF)).

US 2013/0095268 A1 describes 2,5-furandicarboxylic acid-based polyesters comprising 1,4-cyclohexylenedimethanol (CHDM) residues and optionally other aromatic dicarboxylic acid residues, aliphatic dicarboxylic acid residues and/or residues of at least one modifying glycol. The modifying glycol may be ethylene glycol or 2,2,4,4-tetramethyl-1,3-cyclobutanediol. Examples 3 and 4 disclose the synthesis CHDM modified polyethylene furandicarboxylate (PEFG). The obtained polymers have an inherent viscosity of 0.76 dL/g and 0.90 dL/g and a glass transition temperature of 84°C and 85°C, respectively. The application is however silent with respect to the mechanical properties of these polyesters.

Aliphatic-aromatic biodegradable polyesters based on aliphatic dicarboxylic acids, aromatic dicarboxylic acids of renewable origin, preferably 2,5-furandicarboxylic acid, and diols are disclosed in WO 2009135921 A1. Among the list of suitable diols are cited dianhydrosorbitol, dianhydromannitol, dianhydroiditol and cyclohexane-methanediol. However, alpha-omega $C_2$-$C_4$ diols are preferred. Accordingly, the only polyesters that are exemplified are poly(butylene furandicarboxylate-co-butylene sebacate) containing respectively 60% and 70% 2,5-furandicarboxylate moieties.

US 2011/282020 A1 relates to polyesters and copolyesters comprising 2,5-furandicarboxylic acid moieties and moieties of a diol or polyol. A process of preparing such (co)polyesters by transesterification is also described. Ethylene glycol, 1,4-cyclohexanedimethanol and isosorbide are part of the list of suitable diol and polyol monomers. The only polyester that has been prepared is however polyethylene-2,5-furandicarboxylate (PEF), i.e. a polyester comprising ethylene glycol moieties and 2,5-furandicarboxylate moieties.

In WO 2014/100257, polyesters comprising 2,5-furandicarboxylic acid, 2,6-naphtalene dicarboxylic acid and isosorbide moieties are disclosed. These polyesters may further comprise ethylene glycol moieties, a mixture of 1,3-cyclohexanedimethanol and 1,4-cyclohexanedimethanol moieties and/or 2,2,4,4-tetramethyl-1,3-cyclobutanediol moieties. However, this patent application does not contain any real working example.

In view of the above, there remains a need for new polyesters based on monomers from renewable resources. Applicants have now found that 2,5-furandicarboxylic acid-based polyesters containing a specific mixture of ethylene glycol, 1,4 : 3,6-dianhydrohexitol, especially isosorbide, and alicyclic diol units other than the 1,4 : 3,6-dianhydrohexitol units, for instance 1,4-cyclohexanedimethanol units or 2,2,4,4-tetramethyl-1,3-cyclobutanediol units, may be prepared with relatively short reaction times compared to those disclosed in the prior art for PEF and PEIF. The obtained polyesters have good mechanical properties and a glass transition temperature in the range of those found for PEIF.

## Summary of the Invention

The invention thus relates to a thermoplastic polyester comprising:

- 2,5-furandicarboxylic acid moieties (A);
- ethylene glycol moieties (B);
- 1,4 : 3,6-dianhydrohexitol moieties (C);
- alicyclic diol moieties other than the 1,4 : 3,6-dianhydrohexitol moieties (D);

wherein the molar ratio (B) / [(B) + (C) + (D)] is greater than 0.2.

The invention also relates to a process of preparing the polyester according to the invention. This process comprises reacting 2,5-furandicarboxylic acid or a C1-C2 alkyl ester of 2,5-furandicarboxylic acid with ethylene glycol (B), isosorbide (C) and 1,4-cyclohexanedimethanol (D), wherein the molar ratio (B) / [(B) + (C) + (D)] is greater than 0.2.

Finally, the invention relates to the use of the polyester of the invention for the manufacture of plastic articles or in other terms to plastic articles comprising the polyester of the invention.

## Detailed description of the Invention

The polyester of the invention is a thermoplastic polyester comprising:

- 2,5-furandicarboxylic acid moieties (A);
- ethylene glycol moieties (B);
- 1,4 : 3,6-dianhydrohexitol units (C);
- alicyclic diol moieties other than the 1,4 : 3,6-dianhydrohexitol moieties (D);

wherein the molar ratio (B) / [(B) + (C) + (D)] is greater than 0.2.

Preferably, the polyester of the invention is free of aliphatic dicarboxylic acid moieties and/or terephthalic acid moieties. Accordingly, the polyester of the invention preferably contains only 2,5-furandicarboxylic acid moieties as dicarboxylic acid groups.

The 1,4 : 3,6-dianhydrohexitol (C) may be selected from isosorbide, isomannide, isoidide or mixtures thereof. Preferably, the 1,4 : 3,6-dianhydrohexitol (C) is isosorbide.

The alicyclic diol other than the 1,4 : 3,6-dianhydrohexitol (D) may suitably be selected from one or more of the group consisting of any of the isomers of cyclohexanedimethanol and 2,2,4,4-tetramethyl-1,3-cyclobutanediol. The isomers of cyclohexanedimethanol are especially preferred. Accordingly, the other alicyclic diol can suitably be selected from 1,4-cyclohexanedimethanol, 1,2-cyclohexanedimethanol, 1,3-cyclohexanedimethanol or a mixture thereof, 1,4-cyclohexanedimethanol being preferred. The alicyclic diol (D) may be in cis configuration, *trans* configuration or may be a mixture of diols in *cis* and *trans* configuration. In a preferred embodiment, a *cis/trans* mixture of 1,4-cyclohexanedimethanol is used.

The polyester of the invention contains at least more than 20% by mole of ethylene glycol moieties (B) with respect to the total content of diol moieties [(B) + (C) + (D)]. In other terms, the molar ratio (B) / [(B) + (C) + (D)] is greater than 0.2. Advantageously, the molar ratio [(B) / [(B) + (C) + (D)] does not exceed 0.8. Preferably, the molar ratio (B) / [(B) + (C) + (D)] is from 0.35 to 0.75.

The molar ratio of 2,5-furandicarboxylate content to total diol content (A) / [(B) + (C) + (D)] is advantageously 0.8 to 1.2, preferably it is about 1.

The molar amounts of the diol moieties [B], [C] and [D] may vary within wide ranges, provided that the molar ratio requirement is fulfilled. Typically, the molar amount of ethylene glycol moieties [B] is in the range of 20 to 90 %mol, based on the molar amounts of [B] + [C] + [D], more preferably in the range of 30 to 89 %mol, most preferably within the range of 30 to 60 %mol. The molar amount of 1,4 : 3,6-dianhydrohexitol moieties [C] is in the range of 0.5 to 50 %mol, based on the molar amounts of [B] + [C] + [D], more preferably in the range of 1 to 40 %mol, most preferably within the range of 2 to 25 %mol. The molar amount of alicyclic diol moieties other than 1,4 : 3,6-dianhydrohexitol moieties [D] is in the range of 5 to 80 %mol, based on the molar amounts of [B] + [C] + [D], more preferably in the range of 10 to 70 %mol, most preferably within the range of 20 to 60 %mol. The amounts of the different moieties contained in the polyester of the invention may be determined by $^1$H NMR or by chromatographic analysis of the mixture obtained by complete methanolysis or hydrolysis of the polyester, preferably by $^1$H NMR. The skilled person may easily find the experimental conditions for determining the amount of each of the moieties of the polyester. For example, in a $^1$H NMR spectrum of a poly(ethylene-co-1,4-cyclohexanedimethylene-co-isosorbide 2,5-furandicarboxylate), the chemical shifts corresponding to ethylene glycol are between 4.6 ppm and 4.8 ppm, the chemical shifts corresponding to 1,4-cyclohexanedimethanol are between 0.90-2.40 ppm and 4.00-4.50 ppm,, the chemical shifts corresponding to isosorbide are around 4.15 ppm, 4.80 ppm 5.2 ppm and 5.55 ppm, and the chemical shifts corresponding to 2,5-furandicarboxylate are between 7.25 ppm and 7.50 ppm.

According to a particular aspect of the invention, the polyester is amorphous.

The glass transition temperature of the polyester according to the invention is in the range of those found for poly(ethylene-co-isosorbide 2,5-furandicarboxylate) (PEIF). Preferably, the glass transition temperature is at least 80°C, more preferably at least 85°C. The glass transition temperature may be determined by conventional methods, in particular by differential scanning calorimetry (DSC) using a heating rate of 10 K/min. A detailed protocol is set out in the Example section below.

The polyester according to the invention exhibits good mechanical properties. In particular the stress at break is improved compared to PEIF. Preferably, the stress at break, determined according to ISO 527:1996, is at least 50 MPa, more preferably at least 55 MPa.

The polyester according to the invention also has a reduced viscosity. Preferably, the reduced viscosity ($\eta_{red}$) in solution (35°C, ortho-chlorophenol ; 5 g of polyester /L) is at least 40 mL/g, preferably at least 45 mL/g. The reduced viscosity ($\eta_{red}$) of the polymers is determined with an Ubbelohde viscometer, preferably an automated Ubbelohde viscometer, at 35°C. Polymer samples were dissolved at 135°C for 2h in orthochlorophenol (Aldrich France) at a concentration of $C_1$=5 g·L$^{-1}$. Subsequently, the reduced viscosity is calculated according to the following equation ($t_0$ and $t_s$ refer to neat solvent and polymer-solvent solution flow times, respectively):

$$\eta_{red} \, (mL. \, g^{-1}) = \frac{t_s - t_0}{t_0 \times C_1}$$

Even though it may comprise important amounts of 1,4 : 3,6-dianhydrohexitol moieties which are known as responsible for coloration of the polyester during polymerization, the inventors found that the polyester according to the invention show little to no coloration. The coloration of the polyesters according to the invention is advantageously measured on 25g of polymer pellets that are placed in cylindrical glass cell CR-A502.The color was then measured by using a spectrophotometer, viz. a Konica Minolta CM-2300d, by determining lightness L*. Red balance a* and yellow balance b* may also be determined with this method. In this respect, the polyester may have a lightness L* greater than 50. Advantageously, lightness L* is greater than 55, preferably greater than 60, more preferably greater than 65. Advantageously, red balance a* is -5 to 5 preferably -2 to 2. Yellow balance is advantageously -5 to 5 preferably -2 to 2.

The polyester according to the invention advantageously has a weight average molar mass Mw, determined by size exclusion chromatography (SEC), of greater than 7500 g/mol, preferably of greater than 10 000 g/mol, and still preferably of greater than 15 000 g/mol. The determination of the molecular mass is by size exclusion chromatography is carried out using a mixture of chloroform and 1,1,1,3,3,3-hexafluoro-2-propanol (in a volume ratio of 95:5). A detailed protocol is set out in the Example section below.

The invention also relates to a process of preparation of the polyester according to the invention. This process comprises the following steps:

- introducing into a reactor monomers comprising 2,5-furandicarboxylic acid or a diester, preferably $C_1$-$C_2$ alkyl diester, thereof (A), ethylene glycol (B), at least one 1,4 : 3,6-dianhydrohexitol (C), and at least one alicyclic diol other than the 1,4 : 3,6-dianhydrohexitol (D), the molar ratio (B) / [(B) + (C) + (D)] being greater than 0.2 and the monomers not comprising aliphatic dicarboxylic acid or a diester thereof and/or terephthalic acid or a diester thereof;
- polymerizing the monomers, said step comprising:

  ◦ oligomerization of the monomers by esterification or transesterification during which the reaction mixture is stirred under inert atmosphere at a temperature of 140 °C to 230 °C, preferably 160 °C to 220 °C;
  ◦ polycondensation of the oligomers during which the oligomers are stirred under vacuum at a temperature of 230 °C to 300 °C, preferably 240 °C to 280 °C,

- collecting the resulting polyester.

The particular combination of monomers does not only lead to polymers having good thermal and mechanical properties, especially in terms of stress at break and glass transition temperature, but drastically reduces the polymerization time. The (trans)esterification time is advantageously 2 hours to 4 hours. The polycondensation time is advantageously 2 to 4 hours. The oligomerization is advantageously carried out in the presence of a catalyst. This (trans)esterification catalyst may be a single catalyst or a combination of catalysts. It may be selected from tin, preferably tin (IV), titanium, zirconium, hafnium, zinc, manganese, calcium or strontium, antimony compounds, or a mixture of two or more of these catalysts. Examples of catalysts that may be employed in the oligomerization stage are those disclosed in US 2011/282020 A1 at paragraphs [0026] to [0029], and at page 5 of WO 2013/062408 A1. Preferably, the catalyst is a titanium compound, a zinc compound, a manganese compound or a tin (IV) compound

The (trans)esterification catalyst may be used in an amount of 10 to 500 ppm by weight with respect to the total weight of monomers. It may be introduced into the reactor together with the monomers prior to the polymerization stage.

At the end of the oligomerization stage, the catalyst may optionally be blocked by the addition of phosphorous acid or phosphoric acid, or else, as in the case of tin (IV), be reduced by phosphites, such as triphenyl phosphite or tris(nonylphenyl) phosphite or those mentioned in section [0034] of US 2011/282020.

The oligomerization stage is carried out under inert atmosphere i.e. under atmosphere of at least one inert gas, preferably nitrogen. This first stage may be carried out under an inert gas stream. It may also be carried out under absolute pressure, e.g. at a pressure between 1.05 to 7 bars. Preferably the absolute pressure is between 1.2 and 6 bars, e.g. 3.0 bars.

Prior to the oligomerization stage, the monomers, especially isosorbide, are preferably deoxygenized. Deoxygenation may be carried out, after having introduced the monomers into the reactor, by applying a vacuum and then introducing an inert gas, such as nitrogen. This vacuum-inert gas cycle may be repeated 1 or more times, e.g. 3 to 5 times, preferably 4 times. Preferably, the vacuum-inert gas cycle is carried out at a temperature between 60 and 80°C so that the reagents, in particular the diols are completely molten. The deoxygenation step improves the coloration of the polyester according to the invention.

The polycondensation of the oligomers is carried out under vacuum. Pressure may be decreased during this step by using a gradient or in steps or by using a combination of both. Preferably, the pressure is less than 10 mbar, preferably less than 1 mbar at the end of the polycondensation stage.

An additional catalyst may optionally be used in the polycondensation stage. This catalyst may be chosen from tin, preferably tin (II), titanium, zirconium, germanium, antimony, bismuth, hafnium, magnesium, cerium, zinc, cobalt, iron manganese, calcium, strontium, sodium, potassium, aluminum or lithium derivatives or a mixture of two or more thereof. Examples of suitable catalysts are, for example, those cited in EP 1 882 712 B1 in sections [0090] to [0094]. Preferably, the catalyst is a tin (II), titanium, antimony or germanium derivative. The metals may suitably be provided in the form of their salts or oxides or hydroxides. Suitable salts include the carboxylates, carbonates, alkoxides. The carboxylates may preferably be selected from formates, acetates, propionates and mixture thereof. Suitable alkoxides include alkoxides having from 1 to 8 carbon atoms, in particular, methoxide, ethoxides, butoxides or mixtures thereof.

According to a particular embodiment, an antioxidant is added to the monomers in order to reduce coloration of the polyester. The antioxidant may be selected from primary or secondary antioxidant. Primary anti-oxidants useful in the present invention include sterically hindered phenol derivatives such as Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 or a phosphonate such as Irgamod® 195 (Calcium bis[monoethyl(3,5-di-terl-butyl-4-hydroxybenzyl)phosphonate]). Secondary anti-oxidants useful in the present invention include trivalent phosphor compounds such as Ultranox® 626, Doverphos® S-9228, Hostanox® P-EPQ, or Irgafos 168.

A polymerization additive limiting etherification side reactions may also be added to the monomers. Suitable such additives include tetramethylammonium hydroxide and tetraethylammonium hydroxide.

The process of the invention comprises a step of collecting the polyester at the end of the polymerization stage. The polyester may be collected by extracting a strand of molten polymer from the reactor. This strand may be transformed into granules using classic granulation techniques.

If desired, the polyester thus prepared can be subjected to solid state polymerization. In such a case the polyester is maintained at elevated temperature below the melting temperature under vacuum or under a flow of inert gas, such as nitrogen. During the solid state polymerization (SSP) the molecular weight of the polyester increases. The duration of the SSP may suitably be in the range of 6 to 72 hours. The temperature at which the SSP takes place may preferably be in the range from 90 to 180 °C. The temperature may be increased from lower values in this range to higher values in the range during the duration of SSP. However, preferably, the polyester is collected and used without having been subjected to SSP.

The invention also relates to a composition comprising the polyester according to the invention, said composition optionally comprising at least one additive and/or at least one additional polymer.

The composition may comprise the polymerization additives optionally employed in the process according to the invention. It may also comprise other additives and/or additional polymers which are usually added during a subsequent thermomechanical mixing step.

Suitable additives include, without being limited thereto, fillers or organic or inorganic fibers, which may be nanometric and/or optionally functionalized. Examples of such additives include in particular silica, zeolites, glass fibers, glass beads, clay, mica, titanates, silicates, graphite, calcium carbonate, carbon nanotubes, wood fibers, carbon fibers, polymer fibers, proteins, cellulose fibers, lingo-cellulosic fibers, and granular starch. These fillers or fibers may contribute to improve hardness, rigidity or water or gas permeability of the composition according to the invention. The composition may comprise 0.1 to 75% by weight of fillers and/or fibers with respect to the total weight of the composition, e.g. 0.5 to 50% by weight. The additive useful for the composition according to the invention may also comprise opacifying agents, dyes and pigments. They may e.g. be selected from cobalt acetate, HS-325 Sandoplast® RED BB (an azo compound also known as Solvent Red 195), HS-510 Sandoplast® Blue 2B (an anthraquinone), Polysynthren® Blue R, and Clariant® RSB Violet.

The additive may also be a processing aid for reducing the pressure in the processing tool. A stripping agent reducing adhesion of the polyester to processing tools, such as molds, may also be used. These agents may be selected from fatty acid esters and amides, metal salts, soaps, paraffins and hydrocarbon wax. Specific examples of such agents are zinc stearate, calcium stearate, aluminum stearate, stearamides, erucamides, behenamides, bees wax or candelilla wax.

The composition may also comprise other additives such as stabilizing agents, e.g. light stabilizing agents, UV stabilizing agents and thermal stabilizing agents, fluidifying agents, flame retardants, and antistatic agents.

The composition may also comprise an additional polymer, other than the polyesters according to the invention. This polymer may be selected from polyamides, polyesters other than the polyester according to the invention, polystyrene, styrene copolymers, styrene-acrylonitrile copolymers, styrene-acrylonitrile-butadiene copolymers, methyl polymethacrylates, acrylic copolymers, poly(ether-imides), phenylene polyoxides such as (2,6-dimethylphenylene) polyoxide, phenylene polysulfates, poly (ester-carbonates), polycarbonates, polysulfones, polysulfone ethers, polyether cetones et mixtures of these polymers.

The composition may also comprise, as additional polymer, a polymer improving shock resistance of the polymer, in particular functional polyolefins such as functionalized ethylene or propylene polymers or copolymers, core-shell copolymers or block copolymers.

The composition according to the invention may also comprise, as additional polymer, polymers of natural origin, such as starch, cellulose, chitosans, alginates, proteins, such as gluten, pea proteins, casein, collagene, gelatin, lignin, these polymers optionally being chemically or physically modified. The starch may be destructured or olastified. The plastifier may be water or a polyol, in particular glycerol, polyglycerol, isosorbide, sorbitans, sorbitol, mannitol or urea. In this case the composition may be prepared according to the process described in WO 2010/010282 A1.

The polyester according to the invention is useful for the preparation of plastic articles. The invention thus also relates to a plastic article comprising the polyester according to the invention. Examples of such articles include, without being limited thereto, thermoformed articles, films, shrink labels, bottles, and fibers.

## Examples

The following reagents were used for the preparation of the polyesters :

Ethylene glycol (purity >99,8%, Sigma-Aldrich)
1,4-cyclohexane dimethanol (purity 99%, cis/trans mixture, Sigma-Aldrich)
Isosorbide (purity >99,5%, Polysorb® P, Roquette Freres)
2,5-furandicarboxylic acid (purity >99.9%, Avantium)
Dimethyl 2,5-furandicarboxylate (purity : 99.5 % Satachem)
Titanium(IV)tetrabutoxide (purity : 97% Sigma-Aldrich)
Antimony oxide (purity : 99%, Sigma-Aldrich)
Irganox 1010; pentaerythritol tetrakis(3-(3,5-di-tert-butyl-4-hydroxyphenyl)propionate)(BASF AG)
Hostanox P-EPQ (Clariant) (Phosphorous trichloride, reaction products with 1,1'-biphenyl and 2,4-bis(1,1-dimethylethyl)phenol)
Tetraethyl ammonium hydroxide (40% in water, Sigma-Aldrich)

## Analytical methods

Thermal properties of the polyesters were determined by differential scanning calorimetry (DSC). The sample is first heated under nitrogen atmosphere in an open crucible from 10 °C to 280 °C (10 °C.min$^{-1}$), cooled to 10 °C (10 °C.min$^{-1}$) and then reheated to 280 °C under the same conditions as in the first heating step. Glass transition temperatures are taken at the mid-point of second heating. Eventual melting temperatures are determined at the onset of the endothermic peak of second heating. Fusion enthalpy is determined at first heating.

Polymer molar mass was assessed by size exclusion chromatography (SEC) in a mixture of chloroform and 1,1,1,3,3,3-hexafluoro-2-propanol (95:5 vol%). Samples of 1 g·L$^{-1}$ were eluted at a flow rate of 0.75 mL.min$^{-1}$. The signals were then detected with a RI detector (Viscotek VE3580). The average molar masses ($M_n$ and $M_w$) were determined with a calibration method using polymethylmethacrylate standards. The polydispersity index (PDI) was calculated according to PDI = $M_w/M_n$.

The reduced viscosity ($\eta_{red}$) of the polymers was determined with an automated Ubbelohde viscometer at 35°C.

Polymer samples were dissolved at 135°C for 2h in orthochlorophenol (Aldrich France) at a concentration of $C_1$=5 g·L⁻1. Subsequently, the reduced viscosity was calculated according to the following equation ($t_0$ and $t_s$ refer to neat solvent and polymer-solvent solution flow times, respectively):

$$\eta_{red}\ (mL.\ g^{-1}) = \frac{t_s - t_0}{t_0\ \times\ C_1}$$

The coloration of the polymer was measured on 25g of polymer pellets that are placed in cylindrical glass cell CR-A502. The color was then measured with a spectrophotometer Konica Minolta CM-2300d.

The ¹H NMR analysis of polyester samples was carried out by using a 400MHz Brucker liquid state NMR spectrometer equipped with a QNP probe. The 15mg of the polymer sample was solved in 0.6ml of CDCl3 (deuterated chloroform) and 0.1 mL of *d1*-TFA (deuterated tetrafluoro acetic acid).

**Preparation of polyesters**

**Example 1**

50.0 g of Dimethyl 2,5-furandicarboxylate, 24.7 g of ethylene glycol, 12.1 g of isosorbide, 21.7g of 1,4-cyclohexane dimethanol and 0.09 g of titanium (IV) tetrabutoxide were introduced into a 200 mL reactor. The mixture was mechanically stirred at 150 rpm and heated to 160°C in 15 minutes under a stream of nitrogen. The temperature was then maintained at 160°C for 30 minutes before being further heated to 190°C in 15 minutes. This temperature was maintained for 1h30 so as to eliminate a maximum of methanol by distillation.

Then the reactor temperature was increased to 260°C, the pressure is reduced in 90 min to 0.7-5 mbar and the reaction mixture was stirred at 50 rpm. These conditions were maintained for 3h. The hot polymer was then removed from the reactor.

The properties of the obtained polyester are reported in table 1.

**Example 2**

50 g of Dimethyl 2,5-furandicarboxylate, 31 g of ethylene glycol, 18.2 g of isosorbide, 8.8 g of 1,4-cyclohexane dimethanol and 0.089 g of titanium (IV) tetrabutoxide were introduced into a 200 mL reactor. The mixture was mechanically stirred at 150 rpm and heated to 160°C in 15 minutes under a stream of nitrogen. The temperature was then maintained at 160°C for 30 minutes before being further heated to 190°C in 15 minutes. This temperature was maintained for 1h30 so as to eliminate a maximum of methanol by distillation.

Then the reactor temperature was increased to 260°C, the pressure is reduced in 90 min to 0.7-5 mbar and the reaction mixture was stirred at 50 rpm. These conditions were maintained for 3h. The hot polymer was then removed from the reactor.

The properties of the obtained polyester are reported in table 1.

**Example 3**

384.8 g of ethylene glycol, 301.9 g of isosorbide, 935.3 g of 1,4-cyclohexane dimethanol, 2000.3 g of 2,5-furandicarboxylic acid, 1.25 g of Irganox 1010, 1.2 g of Hostanox P-EPQ, 1.02 g of antimony oxide previously dissolved in 60 g of ethylene glycol and 0.37 g of tetraethyl ammonium hydroxide were introduced into a 7.5 L reactor.

Residual oxygen was removed from the isosorbide crystals by applying 4 vacuum-nitrogen cycles between 60 and 80°C. The reaction mixture was then heated to 210 °C (4°C/min) at a pressure of 1.5 bar and constant stirring at 150 rpm. Esterification time was 3h20, the degree of esterification was determined from the quantity of distillate that was recovered.

Then the reactor temperature was increased to 260°C and the pressure is reduced in 90 min to 0.7 bar. The reaction conditions were maintained until an increase of the couple of 12.3 Nm with respect to the initial couple. The polycondensation time was 3h30. Finally, a polymer strand was cast through the valve in the bottom of the reactor, cooled in a thermoregulated water bath and cut into granules.

The properties of the obtained polyester are reported in table 1.

**Example 4**

469.1 g of ethylene glycol, 155.6 g of isosorbide, 881.9 g of 1,4-cyclohexane dimethanol, 2000.3 g of 2,5-furandicarboxylic acid, 1.25 g of Irganox 1010, 1.2 g of Hostanox P-EPQ, 1.04 g of antimony oxide previously dissolved in 60 g of ethylene glycol and 0.37 g of tetraethyl ammonium hydroxide were introduced into a 7.5 L reactor.

Residual oxygen was removed from the isosorbide crystals by applying 4 vacuum-nitrogen cycles between 60 and 80°C. The reaction mixture was then heated to 210 °C (4°C/min) at a pressure of 1.5 bar and constant stirring at 150 rpm. Esterification time was 2h55, the degree of esterification was determined from the quantity of distillate that was recovered.

Then the reactor temperature was increased to 260°C and the pressure is reduced in 90 min to 0.7 bar. The reaction conditions were maintained until an increase of the couple of 12.3 Nm with respect to the initial couple. The polycondensation time was 3h. Finally, a polymer strand was cast through the valve in the bottom of the reactor, cooled in a thermoregulated water bath and cut into granules.

The properties of the obtained polyester are reported in table 1.

## Comparative Example 1

50 g of Dimethyl 2,5-furandicarboxylate, 23.6 g of ethylene glycol, 23.6 g of 1,4-cyclohexane dimethanol and 0.084 g of titanium (iV) tetrabutoxide were introduced into a 200 mL reactor. The mixture was mechanically stirred at 150 rpm and heated to 160°C in 15 minutes under a stream of nitrogen. The temperature was then maintained at 160°C for 30 minutes before being further heated to 190°C in 15 minutes. This temperature was maintained for 1h30 so as to eliminate a maximum of methanol by distillation.

Then the reactor temperature was increased to 260°C, the pressure is reduced in 90 min to 0.7-5 mbar and the reaction mixture was stirred at 50 rpm. These conditions were maintained for 3h. The hot polymer was then removed from the reactor.

The properties of the obtained polyester are reported in table 1.

## Comparative Example 2

50 g of Dimethyl 2,5-furandicarboxylate, 33.7 g of ethylene glycol, and 0.0694 g of titanium (iV) tetrabutoxide were introduced into a 200 mL reactor. The mixture was mechanically stirred at 150 rpm and heated to 160°C in 15 minutes under a stream of nitrogen. The temperature was then maintained at 160°C for 30 minutes before being further heated to 190°C in 15 minutes. This temperature was maintained for 1h30 so as to eliminate a maximum of methanol by distillation.

Then the reactor temperature was increased to 240°C, the pressure is reduced in 90 min to 0.7-5 mbar and the reaction mixture was stirred at 50 rpm. These conditions were maintained for 3h. The hot polymer was then removed from the reactor.

The properties of the obtained polyester are reported in table 1.

## Comparative Example 3

1006.1 g of ethylene glycol, 358.5 g of isosorbide, 2450.4 g of 2,5-furandicarboxylic acid, 1.5 g of Irganox 1010, 1.5 g of Hostanox P-EPQ, 1.8 g of antimony oxide previously dissolved in 60 g of ethylene glycol and 0.51 g of tetraethyl ammonium hydroxide were introduced into a 7.5 L reactor.

Residual oxygen was removed from the isosorbide crystals by applying 4 vacuum-nitrogen cycles between 60 and 80°C. The reaction mixture was then heated to 210 °C (4°C/min) at a pressure of 1.5 bar and constant stirring at 150 rpm. Esterification time was about 4h, the degree of esterification was determined from the quantity of distillate that was recovered.

Then the reactor temperature was increased to 260°C and the pressure is reduced in 90 min to 0.7 bar. The reaction conditions were maintained until an increase of the couple of 15 Nm with respect to the initial couple. The polycondensation time was 4h35. Finally, a polymer strand was cast through the valve in the bottom of the reactor, cooled in a thermoregulated water bath and cut into granules.

The properties of the obtained polyester are reported in table 1.

## Comparative Example 4

2656 g of terephthalic acid, 515.7 g of ethylene glycol, 420.7 g of isosorbide, 1154 g of 1,4-cyclohexane dimethanol and 0.3543 g of germanium oxide, 0.709 g of Irgamod 195 and 0.181g of sodium acetate were introduced into a 7.5 L reactor.

Residual oxygen was removed from the isosorbide crystals by applying 4 vacuum-nitrogen cycles between 60 and 80°C. The reaction mixture was then heated to 260 °C (4°C/min) at a pressure of 5.7 bar and constant stirring at 150 rpm. Esterification time was determined from the quantity of distillate that was recovered.

Then the reactor temperature was increased to 270°C and the pressure is reduced in 90 min to 0.7 bar. The reaction conditions were maintained until an increase of the couple of 15 Nm with respect to the initial couple. Finally, a polymer strand was cast through the valve in the bottom of the reactor, cooled in a thermoregulated water bath and cut into granules.

The properties of the obtained polyester are reported in table 1.

**Comparative Example 5**

In a 200mL glass reactor were added 50.0g of furandicarboxylic acid (0.32mol), 25.3g of ethylene glycol (0.41mol), 10.5g of isosorbide (0.07mol) and 0.315 g of antimony oxide. The reacting mixture was then processed according to Example 7 of document US 2013/0171397 A1.

The resulting polyester had a reduced viscosity of 21.7 mL/g (25°C, 5g/L, Phenol: 1,2-dichlorobenzene (50 :50)). The chemical analysis of the PEIF by NMR gave an isosorbide content of 14.6 mol% regarding to the diol content. The molar mass 5 of the polymer was Mn=14 900 g/mol and Mw=26 750 g/mol with a PDI=1.8. The analysis by DSC gave a glass transition of the polymer at 80°C. The color parameters measured on the polymer pellets were L*=27.8, a*=1.3 and b*=8.8.

**Table 1**

| | Ex1 | Ex2 | Ex3 | Ex4 | CEx1 | CEx2 | CEx3 | CEx4 |
|---|---|---|---|---|---|---|---|---|
| % EG[1] | 37.2 | 55.7 | 55.4 | 41.5 | 37.4 | 100 | 90.7 | 39 |
| % ISO[1] | 12.4 | 21.4 | 4.4 | 8.0 | 0 | 0 | 9.3 | 10.8 |
| % CHDM[1] | 52.5 | 22.9 | 40.2 | 50.5 | 62.0 | 0 | 0 | 48.6 |
| % DMFDCA/ FDCA[2] | 100 | 100 | 100 | 100 | 100 | 100 | 100 | 0 |
| % PTA[2] | 0 | 0 | 0 | 0 | 0 | 0 | 0 | 100 |
| $M_n$ (g/mol) | 25 200 | 9 700 | 15 970 | 39 900 | 41 950 | 12 100 | 17 670 | 18000 |
| $M_w$ (g/mol) | 47 050 | 17 900 | 27 365 | 61880 | 83 850 | 47 200 | 35480 | 32200 |
| PDI | 1.8 | 1.8 | 1.7 | 1.6 | 2.0 | 3.9 | 2.0 | 1.8 |
| $\eta_{red}$ (mL/g) | 38.3 | 16.2 | 58.7 | 49.3 | 51.1 | 26.5 | 53.8 | 50.1 |
| Tg (°C) | 89°C | 88°C | 85°C | 91°C | 76°C | 85°C | 97°C | 93°C |
| Tm (°C) | Amorphous | Amorphous | Amorphous | Amorphous | 208 | Amorphous | Amorphous | Amorphous |
| Tc (°C) | Amorphous | Amorphous | Amorphous | Amorphous | 175 | Amorphous | Amorphous | Amorphous |
| Colour | Yellowish | Yellowish | Colorless | Colorless | Yellowish | Yellowish | Yellowish | Slightly yellow |
| L* | - | - | 56.3 | 54.8 | - | - | 54.6 | 61.1 |
| a* | - | - | -1.2 | -1.2 | - | - | 0.2 | -0.1 |
| b* | - | - | 1.4 | 1.3 | - | - | 11.2 | 3.5 |

[1] with respect to total diol content, determined by $^1$H NMR
[2] with respect to total acid content, determined by $^1$H NMR

**Mechanical Properties**

Stress at break of the polyesters of Examples 3 and 4 and Comparative Example 3 were determined according to ISO 527:1996. The stress at break for the polyesters of Examples 3 and 4 is 58 MPa and 59 MPa, respectively, whereas it is 40 MPa for Comparative Example 3.

**Claims**

1.  A polyester comprising:

    - 2,5-furandicarboxylic acid moieties (A);
    - ethylene glycol moieties (B);
    - 1,4 : 3,6-dianhydrohexitol moieties (C);
    - alicyclic diol moieties other than the 1,4 : 3,6-dianhydrohexitol moieties (D);

    wherein the molar ratio (B) / [(B) + (C) + (D)] is greater than 0.2.

2.  The polyester according to claim 1, wherein the 1,4 : 3,6-dianhydrohexitol (C) is selected from isosorbide, isomannide, isoidide or mixtures thereof.

3.  The polyester according to claim 2, wherein the 1,4 : 3,6-dianhydrohexitol (C) is isosorbide.

4.  The polyester according to any of the previous claims, wherein the alicyclic diol other than 1,4:3,6-dianhydrohexitol (D) is selected from 1,4-cyclohexanedimethanol, 1,2-cyclohexanedimethanol, 1,3-cyclohexanedimethanol or a mixture thereof.

5.  The polyester according to claim 4, wherein the wherein the alicyclic diol other than 1,4 : 3,6-dianhydrohexitol (D) is 1,4-cyclohexanedimethanol.

6.  The polyester according to any of the previous claims, wherein the molar ratio [(B) / [(B) + (C) + (D)] does not exceed 0.8, preferably the molar ratio (B) / [(B) + (C) + (D)] is from 0.35 to 0.75.

7.  The polyester according to any of the previous claims, wherein the molar ratio (A) / [(B) + (C) + (D)] is 0.8 to 1.2.

8.  The polyester according to any of the previous claims having a glass transition temperature of at least 80 °C, preferably at least 85°C, wherein the glass transition temperature is determined with the method indicated in the specification.

9.  A process of preparation of the polyester according to any of the previous claims comprising the following steps:

    - introducing into a reactor monomers comprising 2,5-furandicarboxylic acid or a diester, preferably $C_1$-$C_2$ alkyl diester, thereof (A), ethylene glycol (B), at least one 1,4 : 3,6-dianhydrohexitol (C), and at least one alicyclic diol other than the 1,4 : 3,6-dianhydrohexitol (D), and a catalyst, the molar ratio (B) / [(B) + (C) + (D)] being greater than 0.2 and the monomers not comprising aliphatic dicarboxylic acid or a diester thereof and/or terephthalic acid or a diester thereof;
    - polymerizing the monomers, said step comprising:

        ∘ oligomerization of the monomers by esterification or transesterification during which the reaction mixture is stirred under inert atmosphere at a temperature of 140 °C to 230 °C, preferably 160 °C to 220 °C to produce oligomers;
        ∘ polycondensation of the oligomers during which the oligomers are stirred under vacuum at a temperature of 230 °C to 300 °C, preferably 240 °C to 280 °C;

    - collecting the resulting polyester.

10. A composition comprising the polyester according to any of claims 1 to 8, the composition optionally comprising at least one additive and/or at least one additional polymer.

**11.** A plastic article comprising the polyester according to any of claims 1 to 8 or the composition according to claim 10.

**Patentansprüche**

**1.** Polyester, der umfasst:

- 2,5-Furandicarbonsäureanteile (A);
- Ethylenglykolanteile (B);
- 1,4 : 3,6-Dianhydrohexitolanteile (C);
- alicyclische Diolanteile ausgenommen die 1,4 : 3,6-Dianhydrohexitolanteile (D); wobei das Molverhältnis (B) / [(B) + (C) + (D)] über 0,2 liegt.

**2.** Polyester nach Anspruch 1, wobei das 1,4 : 3,6-Dianhydrohexitol (C) ausgewählt ist aus Isosorbid, Isomannid, Isoidid oder Gemischen davon.

**3.** Polyester nach Anspruch 2, wobei das 1,4 : 3,6-Dianhydrohexitol (C) Isosorbid ist.

**4.** Polyester nach einem der vorhergehenden Ansprüche, wobei das alicyclische Diol ausgenommen 1,4 : 3,6-Dianhydrohexitol (D) ausgewählt ist aus 1,4-Cyclohexandimethanol, 1,2-Cyclohexandimethanol, 1,3-Cyclohexandimethanol oder einem Gemisch davon.

**5.** Polyester nach Anspruch 4, wobei das alicyclische Diol ausgenommen 1,4 : 3,6-Dianhydrohexitol (D) 1,4-Cyclohexandimethanol ist.

**6.** Polyester nach einem der vorhergehenden Ansprüche, wobei das Molverhältnis [(B) / [(B) + (C) + (D)] 0,8 nicht überschreitet, vorzugsweise wobei das Molverhältnis (B) / [(B) + (C) + (D)] zwischen 0,35 und 0,75 liegt.

**7.** Polyester nach einem der vorhergehenden Ansprüche, wobei das Molverhältnis (A) / [(B) + (C) + (D)] 0,8 bis 1,2 beträgt.

**8.** Polyester nach einem der vorhergehenden Ansprüche, der eine Glasübergangstemperatur von wenigstens 80 °C aufweist, vorzugsweise wenigstens 85 °C, wobei die Glasübergangstemperatur mit dem in der Beschreibung angegebenen Verfahren bestimmt wird.

**9.** Verfahren zur Herstellung des Polyesters nach einem der vorhergehenden Ansprüche, der die folgenden Schritte umfasst:

- Einbringen von Monomeren in einen Reaktor, die 2,5-Furandicarbonsäure oder einen Diester, vorzugsweise einen $C_1$-$C_2$-Alkyldiester, davon (A), Ethylenglykol (B), wenigstens ein 1,4 : 3,6-Dianhydrohexitol (C) und wenigstens ein alicyclisches Diol ausgenommen 1,4 : 3,6-Dianhydrohexitol (D) und einen Katalysator umfassen, wobei das Molverhältnis (B) / [(B) + (C) + (D)] über 0,2 liegt und wobei die Monomere keine aliphatische Dicarbonsäure oder einen Diester davon und/oder Terephthalsäure oder einen Diester davon umfassen;
- Polymerisieren der Monomere, wobei der Schritt umfasst:

  ∘ Oligomerisierung der Monomere durch Veresterung oder Umesterung, während der das Reaktionsgemisch unter inerter Atmosphäre bei einer Temperatur von 140 °C bis 230 °C gerührt wird, vorzugsweise von 160 °C bis 220 °C, um Oligomere herzustellen;
  ∘ Polykondensation der Oligomere, während der die Oligomere unter Vakuum bei einer Temperatur von 230 °C bis 300 °C gerührt werden, vorzugsweise von 240 °C bis 280 °C;

- Auffangen des resultierenden Polyesters.

**10.** Zusammensetzung, die den Polyester nach einem der Ansprüche 1 bis 8 umfasst, wobei die Zusammensetzung optional wenigstens ein Additiv und/oder wenigstens ein zusätzliches Polymer umfasst.

**11.** Kunststofferzeugnis, das den Polyester nach einem der Ansprüche 1 bis 8 oder die Zusammensetzung nach Anspruch 10 umfasst.

**Revendications**

1.  Polyester comprenant :

    - des fractions d'acide 2,5-furandicarboxylique (A) ;
    - des fractions d'éthylène glycol (B) ;
    - des fractions de 1,4:3,6-dianhydrohexitol (C) ;
    - les fractions de diols alicycliques (D) autres que les fractions de 1,4:3,6-dianhydrohexitol ;

    dans lequel le rapport molaire (B) / [(B) + (C) + (D)] est supérieur à 0,2.

2.  Polyester selon la revendication 1, dans lequel le 1,4:3,6-dianhydrohexitol (C) est choisi parmi l'isosorbide, l'isomannide, l'isoidide ou leurs mélanges.

3.  Polyester selon la revendication 2, dans lequel le 1,4:3,6-dianhydrohexitol (C) est l'isosorbide.

4.  Polyester selon l'une des revendications précédentes, dans lequel le diol alicyclique (D) autre que le 1,4:3,6-dianhydrohexitol est choisi parmi le 1,4-cyclohexanediméthanol, le 1,2-cyclohexanediméthanol, le 1,3-cyclohexanediméthanol ou un mélange de ceux-ci.

5.  Polyester selon la revendication 4, dans lequel le diol alicyclique (D) autre que le 1,4:3,6-dianhydrohexitol est le 1,4-cyclohexanediméthanol.

6.  Polyester selon l'une des revendications précédentes, dans lequel le rapport molaire [(B) / [(B) + (C) + (D)] ne dépasse pas 0,8, de préférence le rapport molaire (B) / [(B) + (C) + (D)] est de 0,35 à 0,75.

7.  Polyester selon l'une des revendications précédentes, dans lequel le rapport molaire (A) / [(B) + (C) + (D)] est compris entre 0,8 et 1,2.

8.  Polyester selon l'une des revendications précédentes ayant une température de transition vitreuse d'au moins 80°C, de préférence d'au moins 85°C, dans lequel la température de transition vitreuse est déterminée selon la méthode indiquée dans la description.

9.  Procédé de préparation du polyester selon l'une des revendications précédentes comprenant les étapes suivantes :

    - l'introduction dans un réacteur de monomères comprenant l'acide 2,5-furandicarboxylique ou un diester, de préférence un diester d'alkyle en $C_1$-$C_2$, celui de (A), de l'éthylène glycol (B), au moins un 1,4:3,6-dianhydrohexitol (C), et au moins un diol alicyclique (D) autre que le 1,4:3,6-dianhydrohexitol, et un catalyseur, le rapport molaire (B) / [(B) + (C) + (D)] étant supérieur à 0.2 et les monomères ne comprenant pas d'acide dicarboxylique aliphatique ou un de ses diesters et/ou d'acide téréphtalique ou un de ses diesters ;
    - la polymérisation des monomères, ladite étape comprenant :

        ◦ l'oligomérisation des monomères par estérification ou transestérification au cours de laquelle le mélange réactionnel est agité sous atmosphère inerte à une température de 140°C à 230°C, de préférence 160°C à 220°C pour produire des oligomères ;
        ◦ la polycondensation des oligomères au cours de laquelle les oligomères sont agités sous vide à une température de 230°C à 300°C, de préférence 240°C à 280°C ;

    - la collecte du polyester résultant.

10. Composition comprenant le polyester selon l'une quelconque des revendications 1 à 8, la composition comprenant éventuellement au moins un additif et/ou au moins un polymère supplémentaire.

11. Article en matière plastique comprenant le polyester selon l'une quelconque des revendications 1 à 8 ou la composition selon la revendication 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130171397 A1
- WO 2015142181 A1
- US 20130095268 A1
- WO 2009135921 A1
- US 2011282020 A1
- WO 2014100257 A
- WO 2013062408 A1
- US 2011282020 A
- EP 1882712 B1
- WO 2010010282 A1